# EUROPEAN PATENT SPECIFICATION

(11) **EP 0 902 581 B1**
(45) Date of publication and mention of the grant of the patent: **02.04.2008**
(21) Application number: 98117166.3
(22) Date of filing: 10.09.1998
(51) Int. Cl.: H04N 1/00, H04N 1/32

(54) **Print system**
Drucksystem
Système d'impression

(30) Priority: 11.09.1997 JP 24718897
(43) Date of publication of application: 17.03.1999
(73) Proprietor: FUJIFILM Corporation, Minato-ku Tokyo (JP)
(72) Inventor: Kinjo, Naoto, Ashigarakami-gun, Kanagawa-ken (JP); Enomoto, Jun, Ashigarakami-gun, Kanagawa-ken (JP)
(74) Representative: Klunker . Schmitt-Nilson . Hirsch

(56) References cited:
- EP-A- 0 845 897

## Description

### BACKGROUND OF THE INVENTION

The present invention relates to the technical field of print systems that output prints (photographs) reproducing the images recorded on films.

Most of the images recorded on photographic films such as negatives and reversals (which are hereinafter referred to as "films") are conventionally printed onto light-sensitive materials (photographic papers) by a technique generally called "direct exposure" (analog exposure) in which the image on a film is projected onto the light-sensitive material for areal exposure.

A printer that adopts digital exposure has recently been commercialized. In this "digital photoprinter", the image recorded on a film is read photoelectrically and converted into digital signals, which are subjected to various kinds of image processing to produce recording image data; a light-sensitive material is exposed by scanning with recording light modulated in accordance with the image data, thereby recording a (latent) image which is then processed photographically to produce a print.

In digital photoprinters, the image is converted to digital image data and exposing conditions can be determined by processing that image data. Hence, by using such digital photoprinters, the correction of dropouts or blocked-ups due to photography with rear light or an electronic flash, the correction of color or density failures, the correction of under- or over-exposure, the correction for the insufficiency of marginal light, sharpening and various other kinds of image processing that have heretofore been impossible or difficult to accomplish by the direct exposure technique can be performed with high degrees of freedom to produce prints of much better quality. In addition, a plurality of images can be composited into a single image or one image can be split into segments or even characters can be composited by the processing of image data. If desired, prints can be outputted after desired editing/processing in accordance with a specific application.

The capability of digital photoprinters is by no means limited to outputting the image as a print (photograph) and they enable the image data to be supplied to computers or stored in recording media such as floppy disks; thus, with digital photoprinters, the image data can be used in various applications other than photography.

Having these features, the digital photoprinter is composed of the following three basic parts: a scanner (image reading apparatus) that reads the image on a film photoelectrically with an image sensor such as a CCD sensor; an image processing apparatus in which the image data read with the scanner is subjected to various kinds of image processing (processing of image data) for determining the output image data, namely, the conditions for exposing a light-sensitive material that is to be outputted as a print; and a printer (image recording apparatus) that exposes a light-sensitive material with recording light such as optical beams modulated with the image data determined with the image processing apparatus and that performs development and other specified processes on the exposed light-sensitive material to produce it as a (finished) print.

When producing prints from films, requests are often made to perform "extra printing", or printing the image in the same frame more than once. In this case, the previous print (which is usually the print outputted in simultaneous printing) and the print (re-print) outputted in extra printing are required to reproduce images having identical colors and densities. In practice, however, due to differences as between print systems or between operators in terms of evaluation and procedures, it often occurs that the re-print has a different image color and density than the previous print and this has been a cause of the major complaint of customers.

### SUMMARY OF THE INVENTION

The present invention has been accomplished under these circumstances and has as an object providing a print system that outputs prints reproducing the images recorded either on photographic films or with image data supply sources such as digital cameras and which, when outputting reprints as in response to a request for extra printing, is capable of consistent reproduction of an image having the same color and density as the image on the previous print.

The stated object of the invention can be attained by a print system that performs image processing on an image recorded on a film and which outputs a print reproducing said image in a visible state, which comprises:
acquisition means for acquiring identifying information that identifies each of frames of the film on which said image is recorded;
memory means in which the identifying information acquired by said acquisition means and information about the image processing that was performed to produce the print reproducing the image in each of the frames that was recorded on the film are stored in correspondence with each other; and
condition setting means which, when producing a print, sets image processing conditions in accordance with the image recorded on the film and which, when producing a re-print of said print, retrieves from said memory means and in accordance with the identifying information acquired by said acquisition means, the information about image processing that corresponds to said identifying information, and which sets image processing conditions in accordance with the retrieved information about image processing.

Preferably, said information about image processing is at least one member of the group consisting of image processing jobs applied, order of the image processing jobs applied, image processing conditions, parameters involved in the image processing conditions and associated data for image processing.

In another preferred embodiment, the print system is either a digital print system that performs photoelectric reading of the image recorded on the film, performs image processing on a resulting input image data to produce an output image data, exposes a light-sensitive material to recording light modulated in accordance with the output image data, and produces a print, or an analog print system that performs photoelectric reading of the image recorded on the film, performs optical image processing on projected light through said film in accordance with the resulting input image data, exposes a light-sensitive material to the projected light and produces a print, said memory means further storing at least one quantity of image features selected from the group consisting of quantity of an image feature for the input image data produced in the previous printing, quantity of an image feature for the output image data produced in the previous printing, and quantity of an image feature for the output print produced in the previous printing, and said condition setting means retrieves from said memory means the quantity of an image feature in addition to said information about image processing and sets the image processing conditions for re-printing in accordance with the information about image processing and the quantity of an image feature.

In yet another preferred embodiment, said identifying information comprises film information that identifies the film itself and information about frame number, and said acquisition means acquires the identifying information from at least one element of the group consisting of a record in a recording medium formed on the film, a description on the film, a label attached to the film, a description on a container of the film, a label attached to the container of the film, an optical record on the film, a bar code recorded on the film, a DX code, information for the date when the first print was made, customer's information in the possession of a photofinisher, and data on the prints so far processed by a photofinisher.

Preferably, the print system further includes means of constructing film information that identifies the film itself and means by which the film information constructed by said constructing means is imparted to the film and/or the container of the film.

Further preferably, said memory means is at least one member of the group consisting of a recording medium possessed by the film, a recording medium located within and/or outside the print system, and a database in the possession of the photofinisher.

In another preferred embodiment, an image data is supplied not from the film but from an image data supply source and a print is outputted that reproduces in the visible state the image carried by said image data.

In yet another preferred embodiment, the print system outputs digital image data in place of or in addition to a print, receives digital image data as well as the information that identifies said digital image data and the information about image processing, and constructs a print reproducing said digital image data.

### BRIEF DESCRIPTION OF THE DRAWINGS

FIG. 1 is a block diagram for an exemplary digital photoprinter using the print system of the invention;
FIG. 2 is a block diagram for an example of the image processing apparatus in the digital photoprinter shown in FIG. 1; and
FIG. 3 shows diagrammatically the printer section of the digital photoprinter shown in FIG. 1.

### DETAILED DESCRIPTION OF THE INVENTION

The print system of the invention will now be described in detail with reference to the preferred embodiment shown in the accompanying drawings.

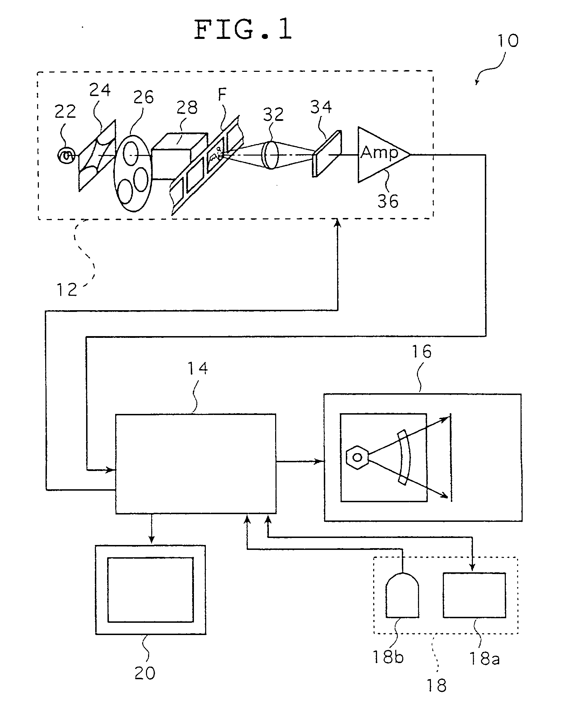

FIG. 1 is a block diagram for an exemplary digital photoprinter using the print system of the invention. The digital photoprinter generally indicated by 10 in FIG. 1 and which is hereinafter referred to simply as the "photoprinter" basically comprises: a scanner (image reading apparatus) 12 with which the image recorded on a photographic film F (hereinafter referred to as "film F") is read photoelectrically; an image processing apparatus 14 that performs image processing of the thus read image data (image information), that selects, sets and changes the image processing conditions, and that allows for manipulation, control and otherwise of the photoprinter 10 in its entirety; and a printer (image recording apparatus) 16 that exposes a light-sensitive material A imagewise with optical beams modulated in accordance with the image data processed in the image processing apparatus 14, develops and otherwise processes the material A and outputs it as a (finished) print P.

Connected to the image processing apparatus 14 are a manipulation unit 18 having a keyboard 18a to enter (set) various conditions, to select and issue a command for a specific processing step and to enter commands for color/density correction and a mouse 18b, as well as a display 20 that displays the image read with the scanner 12, various kinds of manipulative instructions, and screens on which various conditions are set or registered.

The scanner 12 is an apparatus for reading the image on the film F photoelectrically frame by frame. It comprises a light source 22, a variable diaphragm 24, a color filter plate or assembly 26 that has three color filters for separating the image into three primaries R (red), G (green) and B (blue) and which rotates to insert any one of the color filters into the optical path, a diffuser box 28 with which the reading light incident on the film F is made uniform on the plane of the film F, an imaging lens unit 32, a CCD sensor 34 which is an area sensor that reads the image in each frame of the film, and an amplifier 36.

The illustrated photoprinter 10 has dedicated carriers available that can be selectively mounted in the housing of the scanner 12 depending upon such factors as the type and size of films such as a cartridge for an Advanced Photo System and negatives (or reversals) of 135 size, the physical form of the film (e.g. whether it is a strip or a slide) and the kind of treatment to be applied (e.g. trimming). By changing carriers, the photoprinter 10 is capable of handling various kinds of films and treatments.

When reading the images recorded on negatives of 135 size, films in IX240 cartridges for an Advanced Photo System and so forth, the individual frames to be printed are sequentially transported by means of a carrier to specified reading positions and the images recorded in these frames are read sequence.

The carrier compatible with the cartridge of an Advanced Photo System has a magnetic head that reads the information recorded in the magnetic recording medium formed on the films for the system and which stores some other information. The information recorded in the magnetic recording medium on the film is read with the carrier and sent from the scanner 12 to any necessary site in the image processing apparatus 14 or the like; alternatively, the information from the image processing apparatus 14 or the like is sent to the scanner 12, from which is transferred to the carrier so that it is recorded on the magnetic recording medium on the film.

In the scanner 12, reading light issuing from the light source 22 is adjusted in quantity by passage through the variable diaphragm 24, then passed through the color filter plate 26 for color adjustment, and diffused in the diffuser box 28, the thus treated reading light is incident on the film F, through which it is transmitted to produce projected light that carries the image in a particular frame of the film F.

The projected light from the film F passes through the imaging lens unit 32 to be focused on the light-receiving plane of the CCD sensor 34 and read with the CCD sensor 34 photoelectrically; the resulting output signal is amplified with the amplifier 26 and thereafter sent to the image processing apparatus 14.

The CCD sensor 34 may be an area CCD sensor having for example 1380 x 920 pixels. In the illustrated system, the CCD sensor 34 is adapted to move around two-dimensionally (both horizontally and vertically along the pixels) by an amount equivalent to half a pixel; because of this feature, the number of pixels that can be read with the CCD sensor 34 is apparently increased by a factor of up to 4.

In the scanner 12, the above-described process of image reading is performed three times by sequentially inserting the respective color filters in the color filter assembly 26 into the optical path of the reading light, whereupon the image in one frame is separated into three primaries R, G and B.

Prior to fine scanning, or the image reading for outputting a print P, the photoprinter 10 usually performs prescanning, or reading of the image at a lower resolution, in order to determine the image processing conditions and so forth. This means the image reading is performed a total of six times for one frame.

In the illustrated photoprinter 10, the scanner 12 reads the image on a film such as a negative or reversal photoelectrically and the photoprinter 10 yields a print P reproducing said image. However, this is not the sole case of the invention and the film may be replaced by various sources of supplying image data into the print system of the invention, as exemplified by various kinds of image reading means, imaging means and image data storage means including an image reading apparatus that reads the image on a reflection original, a digital camera, a digital video camera, communication means such as a LAN (local area network) and a computer conferencing network and various other recording media such as a memory card, an MO (magneto-optical recording medium) and a photo CD. Image-carrying data from these supply sources is received by the print system which then outputs a print P reproducing the image of interest.

As already mentioned, the output signal (image data) from the scanner 12 is delivered to the image processing apparatus 14.

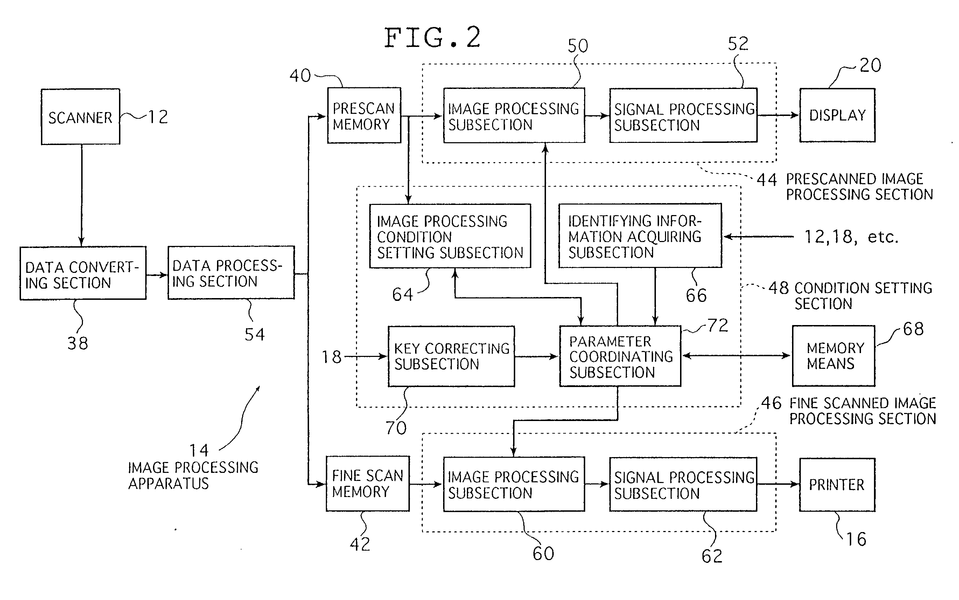

FIG. 2 is a block diagram for the image processing apparatus 14. As shown, the image processing apparatus 14 (hereinafter referred to simply as the "processor 14") comprises a data converting section 38, a data processing section 54, a prescan (frame) memory 40, a fine scan (frame) memory 42, a prescanned image processing section 44, a fine scanned image processing section 46, and a condition setting section 48.

FIG. 2 is mainly intended to show the sites that are related to image processing. In addition to the components shown in FIG. 2, the image processor 14 includes a CPU that controls and manages the photoprinter 10 in its entirety including the image processor 14, a memory that stores the information typically necessary for the operation of the photoprinter 10, and means for determining a specific value to which the variable diaphragm 24 should be stopped down and the storage time of the CCD sensor 34. The manipulating unit 18 and the display 20 are connected to the associated sites via the CPU and related parts (i.e., CPU bus).

The respective output signals associated with R, G and B that have been delivered from the scanner 12 are first subjected to A/D (analog/digital) conversion and log conversion in the data converting section 38 to produce digital (input) image data, which is then supplied to the data processing section 54 where they are subjected to various processes including DC offset correction, darkness correction and shading correction and the thus processed input image data is stored in the prescan memory 40 if it is prescanned image data and in the fine scan memory 42 if it is fine scanned image data.

It should be noted here that the prescanned (image) data and the fine scanned (image) data are essentially the same except for the pixel density and the signal level. In the illustrated apparatus, the amount by which the variable diaphragm 24 is stopped down during fine scanning is set to an optimal value on the basis of the prescanned data by means of the processor 14 and the signal levels of the prescanned and fine scanned data are varied accordingly.

The prescanned data stored in the prescan memory 40 is processed in the prescanned image processing section 44 and the fine scanned data stored in the fine scan memory 42 is processed in the fine scanned image processing section 46.

The prescanned image processing section 44 comprises an image processing subsection 50 and a signal processing subsection 52. The fine scanned image processing section 46 also comprises an image processing subsection 60 and a signal processing subsection 62.

The image processing subsection 50 in the prescanned image processing section 44 (which is hereinafter referred to as "processing subsection 50") and the image processing subsection 60 in the fine scanned image processing section 46 (which is hereinafter referred to as "processing subsection 60") are both a site at which the image (image data) read with the scanner 12 is subjected to specified kinds of image processing in accordance with the image processing conditions set by means of the condition setting section 48 that will be described below in detail. Except for the pixel density of the image data to be processed, the two processing subsections perform essentially the same processing.

The image processing to be performed by the processing subsections 50 and 60 may be exemplified by basic processes including gray balance adjustment (color balance adjustment), contrast correction (toning) and lightness correction, as well as at least one process that is performed depending upon the state of an image (the image data read with the scanner 12), at a customer's request, in response to an operator's instruction or the like and which may be exemplified by the correction of a geometrical distortion, the correction of a density unevenness (the correction of marginal light), sharpening, dodging, finishing for special effects (e.g., cross filtering, soft focusing, rendering in black and white, and rendering in sepia), enhancement/blurring, processing of the face region (in such aspects as density, color/texture of the skin, and enhancement/blurring), correction of red eye, processing and modification of the shape and color of parts of the face such as eyes, hair on the head and lips), correction of flaws on the film, changing proportions in a horizontal and a vertical direction as in causing a person in portraiture to look slender (variable magnification), compositing images (different images and animation characters) and letters, and electronic variable magnification as in trimming.

These corrections may be performed by any known methods that comprise appropriate combinations of arithmetic operations for image processing, processing with LUTs (look up tables), matrix operations and processing with filters. For instance, gray balance adjustment, lightness correction and contrast correction are each performed using correction (adjustment) tables constructed in accordance with the quantities of image features such as highlight (minimal density), shadow (maximal density) and average density. Such correction tables are usually constructed for three primaries R, G and B. Referring to LUTs for gray balance and tone adjustments, they may be constructed by on the basis of image data accumulated for one roll of film F.

Sharpening may be performed by a method in which the original image is averaged to provide a first averaged image, which in turn is averaged, and the difference between the two images is multiplied by a coefficient of sharpness correction and the resulting image is added with the first averaged image.

For dodging, a blurred image (data) is generated using luminance signals converted from image data or by filtering with IIR filters or the like and the blurred image is used to construct LUTs or arithmetic formulae; image data processed with the constructed LUTs or arithmetic formulae are used to compress or expand both high- and low-density regions, whereby the midtone is retained but the dynamic range of the original image is compressed or expanded to impart a dodging effect (see, for example, the specifications of Japanese Patent Application Nos. 165965/1995, 337509/1995 and 207941/1997).

The corrections of geometric distortions and marginal light are chiefly intended to compensate for the distortion and reduced light quantity that occur in the marginal area of an image taken with an inexpensive camera such as a roll of film fitted with a lens. The offset in pixel position due to the distortion and the reduction in the quantity of light can be expressed by functional formulae; hence, in order to correct geometrical distortions and marginal light, suitable functional formulae may be constructed and using them, the positions of individual pixels are corrected to become appropriate and a density adjustment is made to compensate for the decrease in marginal light. Such functional formulae are usually constructed for each of the three primaries R, G and B.

An exemplary method of correcting flaws on the film comprises designating the unwanted region including the flaws by verification with a monitor and replacing the image data for the unwanted region by image data for the surrounding background (see the specification of Japanese Patent Application No. 69366/1997).

The signal processing subsection 52 of the prescanned image processing section 44 is a site at which the image data processed by the processing subsection 50 is transformed with LUTs or like means to produce image data corresponding to the display on the display 20.

The signal processing subsection 62 of the fine scanned image processing section 46 is a site at which the (output) image data processed by the processing subsection 60 is transformed to image data corresponding to image recording by the printer 16, to which it is then supplied. As will be described later in detail, the printer 16 forms a latent image by scan exposing a light-sensitive material (photographic paper) with optical beams modulated with the supplied image data, performs specified development and subsequent processes on the latent image and outputs the thus processed light-sensitive material as a print.

The kinds of image processing to be performed by the processing subsection 50 of the prescanned image processing section 44 and by the processing subsection 60 of the fine scanned image processing section 46, as well as the conditions for such image processing are set by the condition setting section 48.

The condition setting section 48 comprises an image processing condition setting subsection 64, an identifying information acquiring subsection 66, a key correcting subsection 70 and a parameter coordinating subsection 72. Connected to the parameter coordinating subsection 72 is a memory means 68 by which information that identifies individual frames of the film F from which a print was previously prepared (usually when simultaneous printing was done) and the information for processing the image in that frame are stored in correspondence with each other.

The image processing condition setting subsection 64 (which is hereunder referred to simply as "setting subsection 64") sets the conditions for the image processing that should be performed to produce display and output images in the processing subsections 50 and 60 in accordance with the prescanned image and optionally in accordance with the principal part (or its region) extracted from the prescanned image and in response to an operator's instruction and, in the case of reprinting, further using the information about image processing that is stored in the memory means 68, and the thus set image processing conditions are supplied to the parameter coordinating subsection 72.

Specifically, the setting subsection 64, based on the prescanned data, constructs density histograms, calculates the quantities of image features such as average density, highlight, shadow, LATD (large-area transmission density) and maximal and minimal densities in the histograms and optionally extracts the principal part of an image (or its region) such as the face of a person; in accordance with the thus obtained quantities of image features and the principal part of the image, as well as with the operator's instruction, the information about image processing and so forth, the setting subsection 64 determines which of the various kinds of image processing described above should be executed and in what order; the setting subsection 64 also determines the conditions for the image processing to be done and supplies the thus determined parameters to the parameter coordinating subsection 72.

The method of extracting the principal part of an image is not limited in any particular way. An exemplary method is by the operator designating a point in the principal part with an input device such as the mouse 18b and extracting the principal part on the basis of the continuity of the image (in such terms as color and shape). In another method, the principal part of the image on the display screen may be selected using the mouse 18b or some other input device.

Known algorithms for extracting the principal part of an image may also be employed, as described in Unexamined Published Japanese Patent Application (kokai) No. 138470/1997, according to which different methods of extraction as by extracting a specified color, extracting a specified geometrical pattern and eliminating a region estimated to represent the background, are evaluated preliminarily to determine the weights for the respective methods, the principal part of an image is extracted by each method and weighted by the predetermined weights and the principal part is identified and extracted accordingly. Other methods that can advantageously be used in the present invention to extract the principal part of an image are described in Unexamined Published Japanese Patent Application (kokai) Nos. 346333/1992, 158164/1993, 165120/1993, 160993/1994, 184925/1996, 101579/1997, 138471/1997, etc.

Key correcting subsection 70 is such that the amounts of adjustment of the image processing conditions are calculated in response to commands that are entered from the keyboard 18a or the mouse 18b in the manipulating unit 18 for adjusting color, density, contrast (gradation) and other parameters, and the calculated values are supplied to the parameter coordinating subsection 72.

If an input for color adjustment is entered from the manipulating unit 18, the corresponding amount of correction is calculated in the key correcting subsection 70 and, in accordance with the calculated amount of correction, the parameter coordinating subsection 72 corrects the table for gray balance adjustment. If an input for density adjustment is entered, the table for lightness correction is similarly adjusted. If an input for contrast adjustment is entered, the table for contrast correction is likewise adjusted.

The parameter coordinating subsection 72 receives the image processing conditions set by the setting subsection 64, sets the supplied image processing conditions both in the processing subsection 50 of the prescanned image processing section 44 and in the processing subsection 60 of the fine scanned image processing section 46, and adjusts the thus set image processing conditions in accordance with the amounts of adjustments and the like calculated in the key correcting subsection 70.

In the case of simultaneous printing (or when no command for re-printing is issued), the parameter coordinating subsection 72 supplies the memory means 68 with both the information identifying each frame as acquired by the identifying information acquiring subsection 66 and the information about image processing of the specific frame. In the case of re-printing, the parameter coordinating subsection 72 reads the information about image processing of the frame out of the memory means 68 in accordance with the identifying information that has been acquired by the identifying information acquiring subsection 66.

The identifying information acquiring subsection 66 is a site where, when preparing a print, the information that identifies the frame to be printed is acquired and from which it is sent to the parameter coordinating subsection 72.

In order to identify individual frames in the film F, both means of identifying the film F itself and the information about the number assigned to each of the frames in the film are required and the identifying information may be composed of the information identifying the film F itself (e.g., identification number, ID or code) and the frame number.

In both cases of the previous printing and reprinting, the identifying information acquiring subsection 66 acquires the identifying information by any suitable method that is determined by various factors such as the type of the film used and the management system adopted by a specific photofinisher.

Consider, for example, the case where the film F is a film (cartridge) for use in the Advanced Photo System. Since the ID number of the cartridge and the number assigned to each frame are recorded as magnetic information in the magnetic recording medium on the film, the identifying information acquiring subsection 66 receives magnetic information that has been read with and transferred from the scanner 12 (specifically the carrier mounted in it) and acquires the information identifying the frame to be printed, with the ID number of the cartridge being substituted for the film identification number.

Usually, the ID number of the cartridge is not only recorded in the magnetic recording medium but also indicated on the cartridge, so the operator may utilize this information to enter from the keyboard 18a or the like the ID number of the cartridge of the film of which the re-printing has been asked for and the number of the frame to be printed.

In other cases than the Advanced Photo System, the following method may be employed for the identifying information acquiring subsection 66 to acquire the identifying information: in a specific instance such as simultaneous printing (the development of film F and the preparation of a print are done simultaneously), the information identifying the film F is determined in accordance with the date of print, the name of the customer who asked for the print and other information and recorded on the film F (outside the image area) or on the bag or casing of the film F; then in the process of simultaneous printing or re-printing, the operator enters the film identifying information from the keyboard 18a or other input device.

Instead of recording the identifying information directly on the film F or its bag or casing, a label bearing that information may be attached to the film F or its bag or casing. Alternatively, a bar code indicating the film identifying information may be attached to the film F or its bag or casing so that the identifying information is read with a bar code reader.

If desired, the film identifying information or the bar code indicating that information may be optically recorded on a yet to be developed film F and rendered visible by subsequent development.

The methods described above are also applicable to the Advanced Photo System. If desired, the determined identifying information may be recorded magnetically and substituted for the cartridge ID.

The image processor 14 may be so adapted that the film identifying information (or the bar code indicating it) is automatically determined and imparted to the film F or its bag or casing. For example, at the time the film F has been loaded in the scanner 12 (or the carrier), the film identifying information is determined automatically with the processor 14 and sent to the identifying information acquiring subsection 66; the processor 14 is also furnished with means of preparing and attaching a label bearing the identifying information so that the label is attached to the film F for which the reading process (print production) has ended.

Alternatively, when developing the film F, the identifying information is determined automatically with the control section of the film processor and printed optically on the film F in a non-image area (e.g. the virgin area at the advancing or trailing end); in another method, the processor 14 is furnished with means of preparing and attaching a label bearing the identifying information so that it is attached to the developed film.

If the identifying information is imparted to the film F or its bag or casing in such a way that it can be read optically or by other means, the scanner 12 (or the carrier) or the like may perform automatic optical reading during simultaneous printing or re-printing so that the identifying information is automatically acquired by the identifying information acquiring subsection 66.

If a photofinisher (or processing station) has a record on a customer's ID, the date on which a request for simultaneous printing was made, the number of films so far processed and other information, the film F itself can be specified by combinations of these items of information. Therefore, a suitable combination of such items may be substituted for the information identifying the film F.

It should also be noted that a (digital) photoprinter allows print's image data to be saved as a file in a recording medium such as a floppy disk. Hence, the name of the saved image file may be used as the film identifying information.

In whichever case, the frame number has been recorded in each frame in the process of film manufacture and, hence, may be used as such. Alternatively, a DX code may be substituted for the frame number. The identifying information acquiring subsection 66 may acquire the frame number by counting with the scanner 12 (or the carrier), reading of the bar code recorded on the film F or inputting with the operator.

The memory means 68 is such that the information identifying each of the frames of the film F and the information about image processing of the frame are stored in correspondence with each other.

The information about image processing to be stored is the information about image processing for duplicating the same image processing as has been done in the previous printing and may comprise the kinds of image processing that were applied, their order, the image processing conditions or parameters and associated data for duplicating such conditions.

The image processing conditions or parameters and associated data for duplicating them depend on the kinds of image processing to be applied and comprise various kinds of information that can duplicate the previous image processing (conditions), as specifically exemplified by LUTs and processing arithmetic formulae that were constructed for image processing, coefficients in predetermined image processing arithmetic formulae, information about the regions that were subjected to image processing, and data files for composited images or letters.

Speaking first of gray balance adjustment, lightness correction and contrast correction, appropriate LUTs are constructed and used to perform the intended correction and adjustment as already described above; therefore, the necessary LUTs (for the respective primaries R, G and B) are stored. As also mentioned above, LUTs for gray balance adjustment and tone correction may be constructed from image data equivalent to one roll of film F; in this case, the LUTs may be stored as information shared by all frames of the film F to be processed.

For sharpening, the already-mentioned coefficient for sharpness correction is stored.

In dodging, LUTs or processing arithmetic operations are set for processing the image data and the resulting image data is used to compress or expand the dynamic range of densities; therefore, the necessary LUTs or processing arithmetic operations are stored.

The corrections of geometrical distortions and marginal light are performed on the basis of functional formulae that express offsets in pixel positions and reduced light quantities. Hence, such functional formulae are stored. If the functional formulae are constructed for the three primaries R, G and B, they should all be stored. The functional formulae are the same for all frames in one roll of film F and, hence, may be stored as information about the film F. Alternatively, correcting (two-dimensional) tables that represent offsets in pixel positions and reduced light quantities may be constructed and stored.

When the previous image processing was the correction of flaws on the film, the position of a designated flaw and the pixel data (or a portion thereof) for the background substituted for the flaw are stored.

If the previous image processing is the compositing of animation characters and other images or letters, the name of the file of the composited letters or images and the position of their compositing are stored. If the previous image processing is the processing of the face region or a partial modification thereof, the modified region as well as data on color/density and shape correction are stored. If the previous image processing is the changing of proportions in a horizontal and a vertical direction, the variable magnification in the two directions is stored. If the previous image processing is trimming, the variable magnification is stored. If the previous image processing is finishing for special effects, the parameters associated with the respective processes are stored.

As already mentioned, the processor 14 may optionally extract the region of the principal part of an image such as the face region for setting the image processing conditions; therefore, if the previous image processing is limited to the correction of the face region, the information about the face region is also stored.

The memory means 68 of storing the film identifying information and the information about the necessary image processing is not limited to any particular type and various kinds of memory means may be employed.

For example, if the film F is to be used in an Advanced Photo System, the magnetic recording medium formed on the film F may be used as the memory means 68. It should however be noted that due to the limited memory capacity of the magnetic recording medium formed on the film F, it is not suitable for use in storing bulk information.

If desired, a recording medium such as a floppy disk, a magneto-optical recording medium or an IC card may be used as the memory means 68. In this case, the recording medium is handed over to a customer together with a finished print and when reprinting is to be done, the customer returns the recording medium together with a film F and the relevant information is read with a drive or the like that are connected to the photoprinter 10.

If a photofinisher (processing shop) has a data base available for its customers, the data base may be used as the memory means 68. If the film identifying information and the information about the necessary image processing are saved permanently, their amount becomes unbearably bulky. To avoid this problem, the storage time is preferably set for a definite period determined appropriately. For example, most requests for re-printing are made within a month from the simultaneous printing and, hence, the storage time need not be longer than about a month from the simultaneous printing.

Alternatively, the processor 14 or a personal computer in the possession of a photofinisher may be connected to communication means such as a computer conferencing network like a LAN or WAN (wide area network) and at the request for re-printing of the film F, the database of the photofinisher who made the previous printing job is accessed to get the necessary information for image processing. According to another approach, the personal computer in the possession of a customer is used as the memory means 68, in which the film identifying information and the information about the necessary image processing are stored at such a time that simultaneous printing is done and later accessed at the time of re-printing to get the necessary information about image processing.

Referring again to the compositing of animation characters and other images as well as letters, if the data on the composited images or letters (which are hereinafter referred to as "reference data") belong to the customer who made the request for re-printing, the reference data itself may be recorded in the recording medium to be handed over to the customer or on the personal computer in his or her possession.

If the volume of information in the reference data is larger than a specified value, the reference data may itself be saved in the database of the photofinisher for a specified period whereas the name of its file and the information to be accessed are recorded in the recording medium to be handed over to the customer.

If the reference data is for general purposes as in the case where it represents a specified pattern or has been quoted from a certain database, the name of its file and the information to be accessed may be recorded in the recording medium to be handed over to the customer.

If the print's image data is to be saved as a file in a recording medium such as a floppy disk, the film identifying information and the information about the necessary image processing may be added as accessory data to the image file.

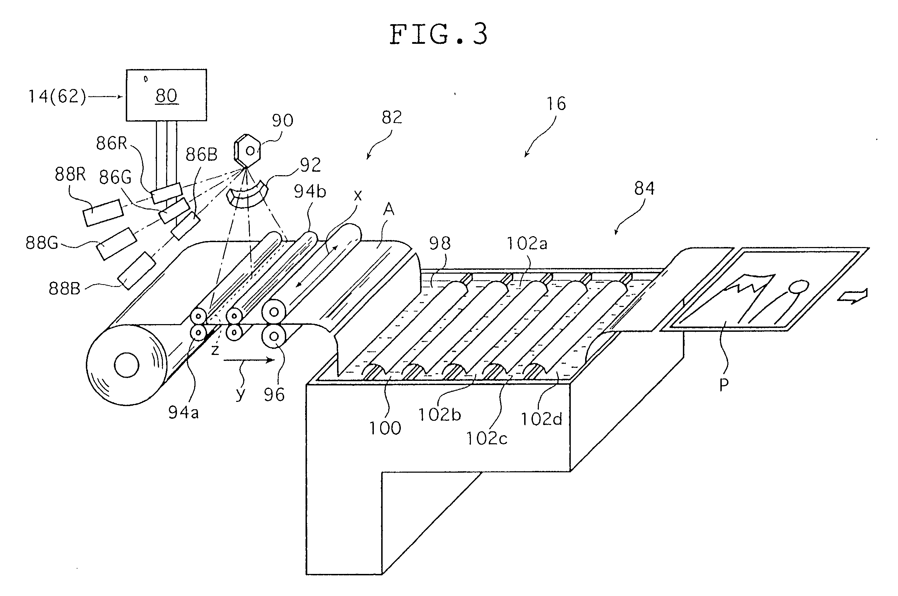

As already mentioned, the image data processed in the processor 14 is subsequently sent to the printer 16 which is shown diagrammatically in FIG. 3. As shown, the printer 16 basically comprises a driver 80, an exposing section 82 and a developing section 84. Optical beams L are modulated, typically pulse-width modulated, in accordance with the image data sent from the processor 14 and a light-sensitive material A is exposed with the modulated optical beams L.

The image data from the processor 14 is sent to the driver 80. In the driver 80, the image data sent from the processor 14 (particularly, the signal processing subsection 62) is converted to signals that drive AOMs 86 such that they perform pulse-width modulation of the optical beams L in accordance with the image to be recorded (the amount of exposure).

In the exposing section 82, the light-sensitive material A is exposed by scanning with the modulated optical beams L such that the image associated with the aforementioned image data is recorded on the light-sensitive material A. As shown in conceptual form in FIG. 3, the exposing section 82 comprises a light source 88R that issues an optical beam in a narrow wavelength range capable of exposing the R-sensitive layer in the light-sensitive material A, a light source 88G similarly capable of exposing the G-sensitive layer, a light source 88B similarly capable of exposing the B-sensitive layer, AOMs 86R, 86G and 86B that modulate the optical beams from the respective light sources in accordance with the image to be recorded, a polygonal mirror 90 as an optical deflector, an fθ lens 92, and means of transporting the light-sensitive material A in an auxiliary scanning direction.

The respective optical beams from the light sources 88R, 88G and 88B travel at different angles to be launched into the corresponding AOMs 86 (86R, 86G and 86B). These AOMs 86 have been supplied from the driver 80 with drive signals R, G and B in accordance with the image to be recorded, or the image data supplied from the processor 14 and being driven with these signals, the AOMs 86 modulate the incident optical beams in accordance with the image to be recorded.

The respective optical beams modulated with the AOMs 86 are incident at substantially the same point on the polygonal mirror 90, from which they are reflected for deflection in the main scanning direction (indicated by arrow x in FIG. 3) and adjusted by the fθ lens 92 such that they are imaged to give a specified beam shape in a specified scan position z to be incident on the light-sensitive material A. The exposing section 82 may be furnished with optical beam shaping means and tilt correcting optics as required.

A web of the light-sensitive material A is rolled on itself and contained in magazines which are loaded in specified positions.

The light-sensitive material A is unreeled with withdrawing rollers and cut with cutter to a specified length corresponding to one print. By means of a pair of transport rollers 94a and 94b that are provided on opposite sides of the scan position z to constitute the means of transport in the auxiliary scanning direction (as indicated by arrow y in FIG. 3) which is perpendicular to the main scanning direction, the light-sensitive material A is transported in the auxiliary scanning direction as the scan position z is held constant relative to it.

Since the optical beams are deflected in the main scanning direction, the entire surface of the light-sensitive material A being transported in the auxiliary scanning direction is exposed by two-dimensional scanning with those beams, whereby the (latent) image associated with the image data transferred from the processor 14 is recorded on the light-sensitive material A.

After the end of exposure, the light-sensitive material A is fed by means of a transport roller pair 96 into the developing section 84, where it is developed and otherwise processed to produce a finished print P.

If the light-sensitive material A is a silver salt light-sensitive material, the developing section 84 essentially comprises a color developing tank 98, a bleach-fixing tank 100, rinsing tanks 102a, 102b, 102c and 102d, a drying zone and a cutter (the latter two are not shown). After being developed and given the necessary treatments in the respective tanks, the light-sensitive material A is dried and outputted as a print P.

The print system of the invention will now be described in greater detail with reference to the action of the photoprinter 10.

Let us first describe the case of performing so-called "simultaneous printing". In the case of simultaneous printing, a carrier compatible with the film F is loaded on the scanner 12 in a specified position and the film F is set on the carrier in a specified position, whereupon the first frame of the film F, usually Frame Number 1 is transported by the carrier to a specified reading position.

If the film F to be read (subjected to print production) is one for the Advanced Photo System, the magnetic information recorded on the film F is read by the carrier as it is transported and the necessary information is transferred to the processor 14 so that the ID number of the cartridge is sent to the identifying information acquiring subsection 66 as a number that identifies the film F.

If the film F is a common negative or reversal of 135 size, the following procedure may be taken: before loading the film F on the carrier, the operator, with reference to the date, customer and other items of information, determines the number that identifies the film F itself and attaches to the non-image area of the film F a label bearing the determined identifying number and he also enters the setting of identifying number from the keyboard 18a. As a result of this entry step, the number identifying the film F to be subjected to print production is sent to the identifying information acquiring subsection 66. As already mentioned, the processor 14 may be so adapted that it can automatically determine the film identifying number, impart it to the film F, read it and transfer it to the identifying information acquiring subsection 66.

Subsequently, an image reading step is started when the scanner 12 has been verified to be in a specified status in such terms as the quantity of light from the light source 22, the setting of the opening of the variable diaphragm 24 and the start-up of the CCD sensor 34.

Stated more specifically, light is issued from the light source 22, has its quantity adjusted by the variable diaphragm 24 and the color filter assembly 26 and diffused by the diffuser box 28. The thus processed reading light is incident on the first frame in the reading position and passes through it to produce projected light carrying the image recorded in that frame. The projected light is then passed through the imaging lens unit 32 to be focused on the image-receiving plane of the CCD sensor 34, where it is converted photoelectrically; the resulting electric signals are amplified with the amplifier 36 and sent to the processor 14.

As already mentioned, the scanner 12 performs this image reading step three times by sequentially inserting the color filters R, G and B of the color filter assembly 26 into the optical path of the reading light, whereupon the image recorded on the film F is sequentially separated into three primaries R, G and B.

Further, as also mentioned above, fine scanning for producing an output image is preceded by prescanning for reading the image at a low pixel density; hence, the reading step is performed a total of six times for each frame.

When the image reading of the first frame ends, the carrier transports the film F by a distance equivalent to one frame so that the second frame is transferred to the reading position and as in the case of the reading of the first frame, both prescanning and fine scanning are performed to read the image in the second frame and the obtained image data is sent to the processor 14. Subsequently, the third frame is transferred to the reading position and the image is read by the same procedure. Similarly, the images in the fourth and ensuing frames are sequentially read and the resulting image data are sent to the processor 14.

In addition to the image data, the information about which of the frames contains the image that was read, namely, the frame number for the image (image data) that was read, is also sent to the processor 14 (particularly to the identifying information acquiring subsection 66). It should be remembered that the frame number may be identified by the number of reading counts from the first frame or by reading the bar code recorded on the film F or on the basis of magnetic information if the film F is for the Advanced Photo System.

The image data outputted from the scanner 12 is supplied to the data converting section 38 where it is subjected to A/D conversion and log conversion to produce digital image data, which in turn is sent to the data processing section 54 where it is subjected to a specified kind of data processing such as offset correction and the processed R, G and B data are sequentially transferred to and stored in the prescan memory 40 if they are prescanned data and in the fine scan memory 42 if they are fine scanned data.

When prescanned data is stored in the prescan memory 40, the setting subsection 64 reads the stored image from the memory. Then, as mentioned above, the setting subsection 64 constructs density histograms and calculates the quantities of the image features and optionally extracts the principal part of the image such as the face of a person. Based on the results of these operations, the setting subsection 64 sets the reading conditions for fine scanning such as the value to which the variable diagram 24 should be stopped down; it also selects what image processing should be executed, determines the order of execution and further sets the conditions for the respective kinds of image processing to be executed. The thus set image processing conditions are sent to the parameter coordinating subsection 72 which sets those conditions in the processing subsection 50 of the prescanned image processing section 44 and in the processing subsection 60 of the fine scanned image processing section 46.

It should be remembered that fine scanning is performed after the reading conditions have been set and fine scanned data for R, G and B are sequentially transferred to and stored in the fine scan memory 42.

When the image processing conditions are set in the processing subsection 50, the prescanned data is read from the prescan memory 40 and processed in the processing subsection 50 under the thus set image processing conditions. The processed image data is then supplied to the signal processing subsection 52, where it is converted to image data for presentation on the display 20, so that a prescanned image is displayed on the display 20.

Looking at the screen of the display 20, the operator verifies the image, or the result of the image processing, and optionally adjusts its color/density, gradation and other characteristic features, as well as compositing and partial modifications of the image using the keyboard 18a or mouse 18b.

Signals for these adjustments are sent to the key correcting subsection 70, which calculates the amounts of correction of the image processing conditions in accordance with the entered inputs and sends them to the parameter coordinating subsection 72. As already mentioned, in accordance with the thus sent amounts of correction, the parameter coordinating subsection 72 corrects the image processing conditions that have been set in the processing subsections 50 and 60. Therefore, in accordance with the operator-entered inputs, the image on the screen of the display 20 also varies.

If the operator concludes that the image on the display 20 is appropriate (i.e., the result of the verification is satisfactory), he manipulates the keyboard 18a or mouse 18b to enter a command for starting the printing operation.

As the result, the image processing conditions are finalized and the fine scanned data is read from the fine scan memory 42, processed in the processing subsection 60 of the fine scanned image processing section 46 under the finalized conditions, sent to the signal processing subsection 62, where it is converted to image data associated with the image recording by the printer 16; the converted image data is subsequently sent to the driver 80 in the printer 16.

At the same time, the parameter coordinating subsection 72 receives the frame number and the film identifying number (which combine to produce the frame identifying information) from the identifying information acquiring subsection 66, keys the received frame identifying information to the information for image processing that corresponds to the finalized image processing conditions and which is specifically exemplified by what image processing should be performed in what order, the parameters and LUTs to be used in image processing, the data indicating the range of applicability of specific image processing and the information about the associated image data, sends both kinds of information to the memory means 68, and stores them in it.

It should be noted that the present invention is not limited to the case of the operator checking the result of image processing. If desired, the image processing conditions may be finalized at the point of time when the parameter coordinating subsection 72 ended the setting of those conditions in the processing subsection 60 and in the same manner as just described above, the printing step is started and both the information about image processing and the frame identifying information are transferred to the memory means 68. Preferably, modes or some other suitable selection means are provided to enable the operator to check or not check the result of image processing.

When the image data is sent to the driver 80 in the printer 16, optical beams modulated by the drive of AOMs 86 with the driver 80 and which have been deflected in the main scanning direction by means of the polygonal mirror 90 perform two-dimensional scan exposure of the light-sensitive material A that has been cut to a specified length equal to one print and which is being transported in the auxiliary scanning direction by means of transport roller pair 94, whereby a latent image is formed and the thus exposed light-sensitive material A is supplied to the developing section 16, where it is color developed, bleach-fixed, rinsed, dried and otherwise processed to be eventually outputted as a final print P. The procedure of these steps has already been described above.

In the print system of the invention, the memory means 68 is not only intended to store the information about the image processing for simultaneous printing; if a customer is dissatisfied with the image obtained by simultaneous printing and asks for reprinting with instructions for specific color/density processing or in the case of reprinting the frame for which no information about its image processing has been stored, the image processing conditions finalized in the process of simultaneous printing may be saved as the information about image processing for the previous print.

In the following description, simultaneous printing is assumed as the production of the previous print.

In contrast with simultaneous printing, the photoprinter 10 performs re-printing by the following basic procedure.

Entering a command for re-printing, the operator loads the scanner 12 with a carrier compatible with the film F the processing of which has been requested by a customer. The operator then loads the film F in the carrier and manipulates the keyboard 18a or the mouse 18b to designate the frame to be re-printed. As the result, the carrier transports the film F so that the frame to be re-printed is transported to the reading position.

If the film F is for use with the Advanced Photo System, the transporting carrier reads the magnetic information recorded in the magnetic recording medium on the film F and the necessary information is sent to the processor 14, where the identifying information acquiring subsection 66 acquires the information identifying the frame to be reprinted, namely, the number identifying the film F (the ID number of the cartridge) and the number of the frame transported to the reading position.

If the film F is a common negative or reversal of 135 size, the operator looks at the description on the film F or the label attached to it and provides input from the keyboard 18a or the mouse 18b in the manner already described above, whereupon the identifying information acquiring subsection 66 acquires the film identifying number. At the same time, the operator designates the frame to be reprinted, whereupon the identifying information acquiring subsection 66 acquires the frame number.

As also mentioned above, the number identifying the film F may be acquired by automatic reading of the identification number on the label and the frame number may be recognized by reading the bar code on the film, so that the two kinds of information can be acquired automatically with the identifying information acquiring subsection 66.

Then, as in the case of simultaneous printing, verification is made as to whether the scanner 12 is in a specified status and if the answer is yes, the reading step is started to perform prescanning and fine scanning, whereupon image data are sequentially sent to the prescan and fine scan memories and stored there.

The identifying information acquiring subsection 66 supplies the parameter coordinating subsection 72 with the information identifying the frame to be re-printed; the parameter coordinating subsection 72 reads from the memory means 68 the information about image processing keyed to the received identifying information and sends it to the setting subsection 64.

In the same manner as in the previous printing (i.e., simultaneous printing), the setting subsection 64 determines the reading conditions for fine scanning. At the same time, using the information about image processing that has been read from the memory means 68, the setting subsection 64 determines what image processing should be done and the order of execution in the same way as in the simultaneous printing. Based on the determined reading conditions and image processing conditions, and optionally using the prescanned image data, the setting subsection 64 duplicates the conditions for the image processing that was applied in the simultaneous printing and sets them in the parameter coordinating subsection 72. If associated data such as those about the compositing of letters and images exist, the parameter coordinating subsection 72 accesses the relevant image data file to acquire the necessary data.

The parameter coordinating subsection 72 sets the duplicated image processing conditions (and associated data, if any) in the processing subsection 60 of the fine scanned image processing section 46. This finalizes the image processing conditions for re-printing and the fine scanned data is read from the fine scan memory 42, processed in the processing subsection 60 under the finalized conditions, subjected to various conversion processes in the signal processing subsection 62, sent to the driver 80 in the printer 16 and subsequently processed as in the simultaneous printing to output a print P. In the case of re-printing, the prescanned image need not necessarily be presented on the display 20.

The image reproduced by re-printing has been obtained by applying the same image processing as in the simultaneous printing under the same image processing conditions and, hence, its color and density feature reasonable agreement with those of the image produced by the simultaneous printing.

As a further advantage, the image processing conditions for re-printing are set on the basis of the information about the image processing for the previous print and, hence, great rapidity is achieved in setting the image processing conditions for re-printing. This is particularly true in the case where LUTs for gray balance adjustment and tonal correction were constructed in simultaneous printing using the image data accumulated for one roll of film F. In the prior art method, re-printing requires the reading of images corresponding to one roll of film F and this is a particularly cumbersome and time-consuming task in the case of a common 135-film which is in a discrete format. This task can be omitted from the present invention to achieve a significant reduction in the overall operating time and cumbersomeness of the operations. Another advantage of the invention that is noteworthy in the case of re-printing is the possibility for omitting the step of extracting the principal part of an image such as the face of a person.

In the cases described above, only the information about image processing is stored in the memory means 68. However, the invention is in no way limited to these cases and not only the information about image processing but also various other information may be stored in the memory means 68 in correspondence with the frame identifying information so that the three kinds of information are used to perform the necessary image processing. This provides for more positive production of a re-print that reproduces an image of the same color and density as the image produced by the simultaneous (previous) printing.

Turning back to the operation of the photoprinter 10, the projected light from the film is converted photoelectrically with the CCD sensor 34 in the scanner 12, whereby the image in each of the frames of the film is read. The quantity of light from the light source 22 and the sensitivity of the CCD sensor 34 are not always the same but variable with time. Therefore, even if the image in the same frame is read with the same apparatus in simultaneous printing and re-printing, the image data outputted from the scanner 12 in re-printing is not necessarily the same as the image data produced in simultaneous printing. As a further problem, the scanner 12 has instrumental (machine-dependent) errors and if different scanners are used to read the image in simultaneous printing and re-printing, the output image data will not necessarily be the same even if the image is in the same frame.

To deal with this situation, the print system of the invention may be so adapted that in addition to the information about the image processing for simultaneous printing, the amounts of image features in the input image data are also stored in the memory means 68 and the quantities of images features calculated for re-printing are compared with the stored quantities of image features for simultaneous printing and the result of the comparison is referenced to correct the fine scanned image data before it is subjected to further image processing.

Specifically, as already mentioned, the setting subsection 64 calculates the quantities of image features from the prescanned image in order to set the image processing conditions and the like. In this embodiment, the quantities of image features calculated in simultaneous printing such as the average image density, highlight and shadow, as well as the shape of a density histogram (e.g., maximal and minimal densities), preferably for each of the three primaries R, G and B, are stored in the memory means 68 together with the information about the image processing for the simultaneous printing.

In the case of re-printing, not only the information about image processing but also the quantities of image features calculated in the process of simultaneous printing are read from the memory means 68 and compared with the quantities of image features calculated from the prescanned data for re-printing and the conditions for corrections are set in such a way that the quantities of image features for re-printing agree with those for simultaneous printing. The corrections for which such conditions are set may be exemplified by a shift in the overall image density and correction with a tone correcting curve (LUT).

As already mentioned, if the image processing conditions for re-printing are finalized, the fine scanned data (input image data) is read from the fine scan memory 42 and, prior to processing with the processing subsection 60, corrected under said conditions for corrections: thereafter, the thus corrected fine scanned data is subjected to image processing in the processing subsection 60.

In the case just described above, the quantities of image features prior to image processing are stored in the memory means 68 and only after corrections are made to ensure that the quantities of image features coincide between simultaneous printing and re-printing, the image processing for re-printing is performed. This is not the sole case of the invention and the following alternative approach may be taken: in the process of simultaneous printing, the quantities of image features for the image (image data) processed in the processing subsection 60 are stored in the memory means 68 together with the information about image processing and after calculating the quantities of image features for the image that has been processed in the processing subsection 60 and the image data processed in the processing subsection 60 is subjected to the same corrections as described in the preceding paragraph in such a way that the quantities of image features coincide between simultaneous printing and re-printing.

According to the embodiments described above, undesired phenomena such as an offset in the image data due, for example, to the status of the scanner 12 are effectively corrected to allow for a more positive production of a re-print that reproduces an image of the same color and density as the image produced by simultaneous printing.

It should, however, be noted that the above-described corrections based on the quantities of image features are not necessary if the instrumental errors from the scanner 12 are within such a narrow range that they can be disregarded between simultaneous printing and re-printing.

Further referring to the photoprinter 10, the light-sensitive material A in the printer 16 is exposed to optical beams modulated with the image data outputted from the image processor 14 and the exposed light-sensitive material A is subjected to development and specified subsequent processing, whereupon it emerges as a print P. Therefore, even if the image processor 14 outputs the same image data, the output image will have a varying color/density if the output power and wavelength of the optical beams produced in the printer 16, the temperatures for development and subsequent processing, the concentrations of processing solutions and so forth vary. As a matter of fact, these conditions are variable with time or even within a day and, as a result, even if the same image data is outputted from the processor 14 in simultaneous printing and re-printing, the image in the output prints P may occasionally have a varying color/density.

To deal with this situation, the print system of the invention may be so adapted that the instrumental errors from the printer 16 are corrected using the quantities of image features for the image reproduced by simultaneous printing.

To be more specific, when outputting an image produced by simultaneous printing, the density of the image is measured and, as in the aforementioned case, the quantities of image features for that image are calculated and stored in the memory means 68 together with the aforementioned information about image processing.

In the process of re-printing, the quantities of image features for the simultaneous printing are read from the memory means 68 and, at the same time, the image to be outputted from the printer 16 is predicted on the basis of the output image data that is produced from the image processor 14 during reprinting (said data may be replaced by the image data processed in the signal processing subsection 62 or the image data processed in the processing subsection 60) and the quantities of image features for that image (which are hereinafter referred to as "predicted quantities of image features") are calculated. Subsequently, the two sets of quantities of image features are compared and the conditions for corrections are set in such a way that the predicted quantities of image features coincide with the quantities of image features for simultaneous printing and the output image data is processed under the thus set correction conditions and thereafter outputted to the driver 80 in the printer 16.

Thus, according to the embodiment just described above, a re-print reproducing an image of the same color and density as the image produced by simultaneous printing can be produced more positively irrespective of the status of the printer 16.

It should be noted here that the above-described corrections based on the quantities of image features are not necessary if the instrumental errors from the printer 16 are within such a narrow range that they can be disregarded between simultaneous printing and re-printing.

As in the embodiment, the method of correction for bringing the predicted quantities of image features into agreement with the quantities of image features for simultaneous printing may be exemplified by shifting of the overall image density and correction with a tone correcting curve.

With a common printer, the relationship between supplied image data and the density of an output image can reasonably be identified as the output characteristic of the printer. Hence, the image in the print P to be outputted from the printer 16 may be predicted from the output image data with the aid of this relationship. For details of this embodiment, reference may be had to the specification of commonly assigned Japanese Patent Application No. 238176/1996.

In the cases described above, the image processing applied, the image processing conditions and so forth are stored as the information about image processing and reprinting is done by using the stored information to duplicate the image processing applied in the simultaneous printing. In the present invention, various other data may be used as the information about image processing, thereby outputting a re-print that reproduces the same image as obtained by simultaneous printing. In an exemplary case, the difference between the input and output image data obtained in simultaneous printing is stored in the memory means 68 as the information about image processing, preferably in a compressed format; in the process of re-printing, the difference is retrieved from the memory means 68, read with the scanner 12 and added to the image data processed in the data processing section 54 and the sum is delivered as output image data to the printer 16.

When the image on the film F is read with the scanner 12, the reading area of the film is defined by a mask formed on the carrier or the like. Needless to say, the size of the mask is smaller than that of the image in each of the frames of the film and, therefore, if the image position relative to the mask is offset between simultaneous printing and re-printing, different images will be reproduced. This also occurs when trimming is done by selecting a portion of the image and reproducing it at an increased scale; if the image position relative to the mask is offset between simultaneous printing and re-printing, different images will be reproduced.

To deal with this situation, the print system of the invention may be so adapted as to be capable of correcting the positional offset in the input image data between simultaneous printing and re-printing; to this end, not only the information about image processing but also positional reference data is recorded and used for re-printing (see the specification of Japanese Patent Application No. 69366/1997).

In the cases described above, prescanned data is used to extract the region of the principal part of the image, set the image processing conditions and perform other steps. The present invention is in no way limited to these cases and the steps exemplified above may be performed using fine scanned data. It should, however, be noted that steps such as the extraction of the principal part of the image and the setting of the image processing conditions need not be performed with image data of high pixel density. In addition, the calculation time increases with the number of pixels. Therefore, in consideration of various factors, especially the operating efficiency, the steps mentioned above are preferably performed using prescanned data.

It should also be noted that in the foregoing cases, prescanning is performed and the prescanned data is used to set the image processing conditions and perform other steps. However, the present invention is not limited to these cases and the scanner 12 may be designed to perform only fine scanning such that the fine scanned data is partly eliminated to prepare image data of a lower pixel density like the prescanned data, which is employed in extracting the principal part of the image, setting the image processing conditions and performing other steps.

As already noted, the applicability of the print system of the invention is not limited to the case of outputting prints reproducing the image recorded on the film F. It may be so adapted that image data is received from various image data supply sources including imaging devices such as a digital camera and a digital video camera and recording media such as a floppy disk and a photo CD and that prints reproducing the image of interest are outputted. The concept of the invention is also applicable to this method of print production and re-prints can be outputted that reproduce an image of the same color and density as the image produced by simultaneous printing.

In this case, too, the information about image processing is the same as the image output from the film F and the frame identifying information can be processed by the various methods exemplified in connection with the use of the film F. If desired, device-generated signals may be used as the frame identifying information.

The print reproducing the image as supplied from various image data supply sources is returned to the customer and, in this case, the processed image data may also be returned. Preferably, the image data supplied from the customer is returned unprocessed (in its original state) because of the following advantages:
depending on what image processing was executed (e.g., blurring or compositing of letters and images), the processed image data cannot be restored to its original state, so in order to ensure that later requests of customers for changing the contents of image processing, reprinting is preferably executed as a duplication of the image processing (inclusive of later changes) of the original image;
secondly, the results of compositing images having copyright such as animation characters and TV personalities may be problematic if they are distributed as image data, so they are preferably restricted to prints.

The print system of the invention is applicable with advantage not only to the digital photoprinter shown in FIG. 1 but also to the conventional direct-exposing (analog exposure) photoprinter. As is well known, the operating principle of the direct-exposing photoprinter is such that projected light carrying the image recorded on a film is focused on a light-sensitive material, which is exposed to the projected light to form a latent image, which in turn is rendered visible by development and subsequent specified processing to produce a print reproducing the image recorded on the film. In order to ensure that the appropriate image is reproduced on the print, the light-sensitive material is exposed to the projected light through the film, with the respective color filters of C (cyan), M (magenta) and Y (yellow) being inserted by suitable amounts into the optical path for adjusting the colors of the image and with the opening of the diaphragm being adjusted to control the quantity of the projected light, thereby adjusting the density of the image. To determine the amounts by which the respective color filters are inserted into the optical path and the amount of adjustment of the diaphragm's opening, the image recorded on the film may be read photoelectrically to obtain image data (input image data) and the quantities of image features such as the LATD, highlight and shadow of the image are calculated for use as the basis for the determination.

When using the print system of the invention in a direct-exposing photoprinter, the amounts by which the respective color filters were inserted into the optical path in simultaneous printing and the amount of adjustment of the diaphragm's opening are stored in the memory means as information about image processing and in the process of re-printing, the stored information about image processing is retrieved in accordance with the frame identifying information that was acquired in the same manner as described in the foregoing cases and the same exposing conditions as employed in the simultaneous printing are duplicated and used to perform exposure with the projected light for producing a re-print.

As described in detail on the foregoing pages, the print system of the invention enables the production of re-prints that feature consistent reproduction of an image having the same color and density as the image reproduced by simultaneous printing and, hence, re-prints that fully meet a customer's request can be outputted in a satisfactory manner.

## Claims

1. A print system that (10) performs image processing on an image recorded on a film (F) and which outputs a print (P) reproducing said image in a visible state, which comprises:
acquisition means (66) for acquiring identifying information that identifies each of frames of the film on which said image is recorded;
memory means (68) in which the identifying information acquired by said acquisition means (66) and information about the image processing that was performed to produce the print reproducing the image in each of the frames that was recorded on the film are stored in correspondence with each other; and
condition setting means (64) which, when producing a print, sets image processing conditions in accordance with the image recorded on the film and which, when producing a re-print of said print, retrieves from said memory means (68) and in accordance with the identifying information acquired by said acquisition means (66), the information about image processing that corresponds to said identifying information, and which sets image processing conditions in accordance with the retrieved information about image processing.

2. The print system (10) according to claim 1, wherein said information about image processing is at least one member of the group consisting of image processing jobs applied, order of the image processing jobs applied, image processing conditions, parameters involved in the image processing conditions and associated data for image processing.

3. The print system (10) according to claim 1 or 2, which is either a digital print system that performs photoelectric reading of the image recorded on the film, performs image processing on a resulting input image data to produce an output image data, exposes a light-sensitive material to recording light modulated in accordance with the output image data, and produces a print, or an analog print system that performs photoelectric reading of the image recorded on the film, performs optical image processing on projected light through said film in accordance with the resulting input image data, exposes a light-sensitive material to the projected light and produces a print, said memory means (68) further storing at least one quantity of image features selected from the group consisting of quantity of an image feature for the input image data produced in the previous printing, quantity of an image feature for the output image data produced in the previous printing, and quantity of an image feature for the output print produced in the previous printing, and said condition setting (64) means retrieves from said memory means (68) the quantity of an image feature in addition to said information about image processing and sets the image processing conditions for re-printing in accordance with the information about image processing and the quantity of an image feature.

4. The print system (10) according to any one of claims 1 - 3, wherein said identifying information comprises film information that identifies the film itself and information about frame number, and said acquisition means (66) acquires the identifying information from at least one element of the group consisting of a record in a recording medium formed on the film, a description on the film, a label attached to the film, a description on a container of the film, a label attached to the container of the film, an optical record on the film, a bar code recorded on the film, a DX code, information for the date when the first print was made, customer's information in the possession of a photofinisher, and data on the prints so far processed by a photofinisher.

5. The print system (10) according to any one of claims 1 - 4, which further includes means of constructing film information that identifies the film itself and means by which the film information constructed by said constructing means is imparted to the film and/or the container of the film.

6. The print system (10) according to any one of claims 1 - 5, wherein said memory means (68) is at least one member of the group consisting of a recording medium possessed by the film, a recording medium located within and/or outside the print system, and a database in the possession of the photofinisher.

7. The print system (10) according to any one of claims 1 - 6, wherein an image data is supplied not from the film but from an image data supply source and a print is outputted that reproduces in the visible state the image carried by said image data.

8. The print system (10) according to any one of claims 1-7, which outputs digital image data in place of or in addition to a print, receives digital image data as well as the information that identifies said digital image data and the information about image processing, and constructs a print reproducing said digital image data.

## Patentansprüche

1. Drucksystem (10), welches eine Bildverarbeitung bezüglich eines auf einem Film (F) aufgezeichneten Bilds durchführt und einen Abzug (P) ausgibt, der das Bild in einem sichtbaren Zustand wiedergibt, umfassend:
eine Aquisitionseinrichtung (66) zum Ermitteln von Kennungsinformation, die jeden Rahmen des Films, in welchem das Bild aufgezeichnet ist, identifiziert;
eine Speichereinrichtung (68), in welcher die von der Aquisitionseinrichtung (66) ermittelte Kennungsinformation und Information über die Bildverarbeitung, die durchgeführt wurde, um den das Bild in jedem der Rahmen, die auf dem Film aufgezeichnet waren, wiedergebenden Abzug zu erzeugen, in Entsprechung zueinander gespeichert sind; und
eine Bedingungseinstelleinrichtung (64), die bei der Erzeugung eines Abzugs Bildverarbeitungsbedingungen in Abhängigkeit des auf dem Film aufgezeichneten Bilds einstellt, und die bei der Erzeugung eines Neuabzugs von dem Abzug aus der Speichereinrichtung (68) und nach Maßgabe der von der Aquisitionseinrichtung (66) ermittelten Kennungsinformation die Information über die Bildverarbeitung auffindet, die der Kennungsinformation entspricht, und die Bildverarbeitungsbedingungen nach Maßgabe der aufgefundenen Information bezüglich der Bildverarbeitung einstellt.

2. Drucksystem (10) nach Anspruch 1, bei dem die Information über die Bildverarbeitung mindestens ein Element aus der Gruppe ist, welche aus angewendeten Bildverarbeitungsjobs, Reihenfolge der angewendeten Bildverarbeitungsjobs, Bildverarbeitungsbedingungen, Parameter in Verbindung mit den Bildverarbeitungsbedingungen und zugehöriger Daten für die Bildverarbeitung besteht.

3. Drucksystem (10) nach Anspruch 1 oder 2, bei dem es sich entweder um ein digitales Drucksystem handelt, welches ein photoelektrisches Lesen des auf dem Film aufgezeichneten Bilds ausführt, eine Bildverarbeitung bezüglich resultierender Eingangsbilddaten ausführt, um Ausgangsbilddaten zu erzeugen, ein lichtempfindliches Material belichtet, um nach Maßgabe der Ausgangsbilddaten moduliertes Licht aufzuzeichnen und einen Abzug erzeugt, oder um ein analoges Drucksystem, welches das auf dem Film aufgezeichnete Bild photoelektrisch liest, eine optische Bildverarbeitung bezüglich des durch den Film projizierten Lichts abhängig von den resultierenden Eingangsbilddaten ausführt, ein lichtempfindliches Material mit dem projizierten Licht belichtet und einen Abzug erstellt, wobei die Speichereinrichtung (68) außerdem mindestens die Menge der Bildmerkmale speichert, ausgewählt aus einer Gruppe, welche besteht aus einer Menge eines Bildmerkmals für die Eingangsbilddaten, die beim vorhergehenden Druck erzeugt wurden, der Menge eines Bildmerkmals für die Ausgangsbilddaten, die beim vorausgehenden Druck erzeugt wurden, und einer Menge eines Bildmerkmals für den ausgegebenen Abzug, der beim vorhergehenden Druckvorgang erstellt wurde, und die Bedingungseinstelleinrichtung (64) aus der Speichereinrichtung (68) die Menge eines Bildmerkmals zusätzlich zu der Information über die Bildverarbeitung holt und die Bildverarbeitungsbedingungen für einen Neuabzug nach Maßgabe der Information über die Bildverarbeitung und der Menge eines Bildmerkmals einstellt.

4. Drucksystem (10) nach einem der Ansprüche 1 bis 3, bei dem die Kennungsinformation Filminformation umfaßt, die den Film selbst identifiziert, ferner Information über die Rahmennummer, und die Akquisitionseinrichtung (66) die Kennungsinformation aus mindestens einem Element der Gruppe ermittelt, welche aus einer Aufzeichnung in einem Aufzeichnungsträger auf dem Film, einer Beschreibung auf dem Film, einem an dem Film angebrachten Etikett, einer Beschreibung auf einem Filmbehälter, einem an dem Behälter des Films befestigten Etikett, einer optischen Aufzeichnung an dem Film, einem auf dem Film aufgezeichneten Strichcode, einen DX-Code, Information über das Datum, zu dem der erste Abzug erstellt wurde, Kundeninformation im Besitz eines Photolabors und Daten über die Abzüge, soweit sie von einem Photolabor hergestellt wurden, umfaßt.

5. Drucksystem (10) nach einem der Ansprüche 1 bis 4, weiterhin umfassend eine Einrichtung zum Erstellen von Filminformation, die den Films selbst identifiziert, und eine Einrichtung, mit der die Filminformation, die von der Erstellungseinrichtung erstellt wurde, dem Film und/oder dem Filmbehälter vermittelt wird.

6. Drucksystem (10) nach einem der Ansprüche 1 bis 5, bei dem die Speichereinrichtung (68) mindestens ein Element aus folgender Gruppe aufweist: ein Aufzeichnungsträger, den der Film besitzt, ein Aufzeichnungsträger, der sich innerhalb und/oder außerhalb des Drucksystems befindet, und eine Datenbank in Besitz des Photolabors.

7. Drucksystem (10) nach einem der Ansprüche 1 bis 6, bei dem Bilddaten nicht von dem Film geliefert werden, sondern von einer Bilddaten-Versorgungsquelle, und ein Abzug ausgegeben wird, der den sichtbaren Zustand des von den Bilddaten repräsentierten Bilds wiedergibt.

8. Drucksystem (10) nach einem der Ansprüche 1 bis 7, welches digitale Bilddaten anstelle von oder zusätzlich zu einem Abzug ausgibt, digitale Bilddaten sowie Information, die die digitalen Bilddaten identifiziert, empfängt, und die Information über die Bildverarbeitung empfängt, um einen Abzug zu erstellen, der die digitalen Bilddaten wiedergibt.

## Revendications

1. Système d'impression (10) qui exécute un traitement d'image sur une image enregistrée sur un film (F) et qui sort une épreuve (P) reproduisant ladite image dans un état visible, comprenant :
des moyens d'acquisition (66) pour acquérir des informations d'identification qui identifient chacune des vues du film sur lequel ladite image est enregistrée ;
des moyens de mémoire (68) dans lesquels les informations d'identification acquises par lesdits moyens d'acquisition (66) et des informations relatives au traitement d'image qui a été exécuté pour produire l'épreuve reproduisant l'image dans chacune des vues qui a été enregistrée sur le film sont stockées en correspondance les unes avec les autres ; et
des moyens de réglage de conditions (64) qui, lors de la production d'une épreuve, règlent des conditions de traitement d'image suivant l'image enregistrée sur le film et qui, lors de la production d'une réimpression de ladite épreuve, récupèrent dans lesdits moyens de mémoire (68) et suivant les informations d'identification acquises par lesdits moyens d'acquisition (66), les informations relatives au traitement d'image qui correspondent auxdites informations d'identification, et qui règlent les conditions de traitement d'image suivant les informations relatives au traitement d'image récupérées.

2. Système d'impression (10) selon la revendication 1, dans lequel lesdites informations relatives au traitement d'image sont au moins un élément du groupe constitué par des tâches de traitement d'image appliquées, un ordre des tâches de traitement d'image appliquées, des conditions de traitement d'image, des paramètres impliqués dans les conditions de traitement d'image et des données associées au traitement d'image.

3. Système d'impression (10) selon la revendication 1 ou 2, qui est soit un système d'impression numérique qui exécute une lecture photoélectrique de l'image enregistrée sur le film, qui exécute un traitement d'image sur des données d'image d'entrée obtenues pour produire des données d'image de sortie, qui expose une matière photosensible à une lumière d'enregistrement modulée suivant les données d'image de sortie, et qui produit une épreuve, soit un système d'impression analogique qui exécute une lecture photoélectrique de l'image enregistrée sur le film, qui exécute un traitement d'image optique sur une lumière projetée à travers ledit film suivant les données d'image d'entrée obtenues, qui expose une matière photosensible à la lumière projetée, et qui produit une épreuve, lesdits moyens de mémoire (68) stockant en outre au moins une quantité de caractéristiques d'image sélectionnée dans le groupe constitué par une quantité de caractéristiques d'image pour les données d'image d'entrée produites à l'occasion de l'impression précédente, une quantité de caractéristiques d'image pour les données d'image de sortie produites à l'occasion de l'impression précédente, et une quantité de caractéristiques d'image pour l'épreuve de sortie produite lors de l'impression précédente, et lesdits moyens de réglage de conditions (64) récupèrent dans lesdits moyens de mémoire (68) la quantité de caractéristiques d'image en plus desdites informations relatives au traitement d'image et règlent les conditions de traitement d'image pour procéder à une réimpression suivant les informations relatives au traitement d'image et la quantité de caractéristiques d'image.

4. Système d'impression (10) selon l'une quelconque des revendications 1 à 3, dans lequel lesdites informations d'identification comprennent des informations de film qui identifient le film lui-même, et des informations relatives au numéro de vue, et lesdits moyens d'acquisition (66) acquièrent les informations d'identification à partir d'au moins un élément du groupe constitué par un enregistrement dans un support d'enregistrement formé sur le film, une description sur le film, une étiquette attachée au film, une description sur un boîtier du film, une étiquette attachée au boîtier du film, un enregistrement optique sur le film, un code-barres enregistré sur le film, un code DX, des informations relatives à la date à laquelle la première épreuve a été réalisée, des informations sur le client en la possession d'un système de finition de photo et des données sur les épreuves traitées jusqu'à présent par un système de finition de photo.

5. Système d'impression (10) selon l'une quelconque des revendications 1 à 4, comprenant en outre des moyens de constitution d'informations de film qui identifient le film lui-même, et des moyens par lesquels les informations de film constituées par lesdits moyens de constitution sont reportées sur le film et/ou sur le boîtier du film.

6. Système d'impression (10) selon l'une quelconque des revendications 1 à 5, dans lequel lesdits moyens de mémoire (68) sont au moins un élément du groupe constitué par un support d'enregistrement possédé par le film, un support d'enregistrement situé à l'intérieur et/ou à l'extérieur du système d'impression, et une base de données en la possession du système de finition de photo.

7. Système d'impression (10) selon l'une quelconque des revendications 1 à 6, dans lequel des données d'image sont fournies non pas par le film mais par une source de fourniture de données d'image, et une épreuve est sortie qui reproduit à l'état visible l'image portée par lesdites données d'image.

8. Système d'impression (10) selon l'une quelconque des revendications 1 à 7, qui sort des données d'image numériques à la place ou en plus d'une épreuve, qui reçoit des données d'image numériques ainsi que les informations qui identifient lesdites données d'image numériques et les informations relatives au traitement d'image, et qui constitue une épreuve reproduisant lesdites données d'image numériques.
